# EUROPÄISCHE PATENTSCHRIFT

(11) **EP 0 826 097 B1**
(45) Veröffentlichungstag und Bekanntmachung des Hinweises auf die Patenterteilung: **04.11.1998**
(21) Anmeldenummer: 96914082.1
(22) Anmeldetag: 15.05.1996
(51) Int. Cl.: F01N 3/20, B01D 53/94, F01N 3/08

(54) **VORMISCHKAMMER FÜR EINE ABGAS-REINIGUNGSANLAGE**
PRE-MIXING CHAMBER FOR AN EXHAUST GAS CLEANING UNIT
CHAMBRE DE PREMELANGE POUR INSTALLATION D'EPURATION DE GAZ D'ECHAPPEMENT

(30) Priorität: 19.05.1995 DE 19518516
(43) Veröffentlichungstag der Anmeldung: 04.03.1998
(73) Patentinhaber: SIEMENS AKTIENGESELLSCHAFT, 80333 München (DE)
(72) Erfinder: HOFMANN, Lothar, D-96224 Burgkunstadt (DE); PFAFF, Oliver, D-96450 Coburg (DE); KLUMPP, Udo, D-96257 Marktgraitz (DE); MATHES, Wieland, D-96247 Michelau (DE)
(86) Internationale Anmeldenummer: DE9600860
(87) Internationale Veröffentlichungsnummer: WO9636797

(56) Entgegenhaltungen:
- DE-A- 4 221 363
- DE-U- 9 016 641
- PATENT ABSTRACTS OF JAPAN vol. 8, no. 138 (C-231), 27.Juni 1984 & JP,A,59 049824 (BABCOCK HITACHI), 22.März 1984,
- PATENT ABSTRACTS OF JAPAN vol. 14, no. 501 (M-1043), 2.November 1990 & JP,A,02 207119 (SHINKO ELECTRIC CO.), 16.August 1990,
- PATENT ABSTRACTS OF JAPAN vol. 10, no. 139 (C-348), 22.Mai 1986 & JP,A,61 000470 (TOSHIBA KIKAI KK), 6.Januar 1986,

## Beschreibung

Die Erfindung bezieht sich auf eine Vormischkammer für die Mischung eines Druckgases, wie Druckluft, mit einem Reduktionsmittel, wie Harnstofflösung oder Ammoniak-Wasser, für eine Abgas-Reinigungsanlage. Sie wird insbesondere in der mit einem geregelten oder gesteuerten Dieselkatalysator (GDK) ausgestatteten Abgas-Reinigungsanlage bei einem Verbrennungsmotor eingesetzt. Sie kann auch bei einer Abgasreinigungsanlage für stationäre Dieselmotoren, z. B. bis 1000 kW mechanischer Leistung, eingesetzt werden.

Zur Verminderung der in Abgas eines Verbrennungsmotors enthaltenen Schadstoffe, im besonderen der Stickoxide, hat sich das Prinzip des geregelten oder gesteuerten Dieselkatalysators (GDK) als vorteilhafte Technik erwiesen. Diese Technik wird vor allem bei Verbrennungsmotoren, die mit Luftüberschuß betrieben werden, wie z. B. bei Diesel- und Magermotoren, eingesetzt. Diese im wesentlichen auf dem Verfahren der selektiven katalytischen Reduktion (SCR) beruhende Technik ist mittlerweile aus zahlreichen Veröffentlichungen, wie z. B. aus den deutschen Patentanmeldungen P 43 09 891.6, P 43 10 926.8 und P 43 15 278.3, bekannt. Beim SCR-Verfahren werden die Stickoxide zusammen mit Ammoniak an einem selektiven Katalysator kontaktiert und dort zu umweltunbedenklichem Stickstoff und zu Wasser umgesetzt.

Aufgrund der mit dem Ammoniakeinsatz verbundenen Gefahr, nämlich der Giftigkeit, und aufgrund der durch Ammoniak hervorgerufene Geruchsbelästigung soll das Ammoniak als solches bei einem mit GDK-System ausgestatteten Verbrennungsmotor nicht im Fahrzeug mitgeführt werden. Das zur katalytischen Umsetzung der Stickoxide erforderliche Reduktionsmittel wird hier in Form einer wäßrigen Harnstofflösung im Fahrzeug mittransportiert. Aus dieser wäßrigen Harnstofflösung wird das Ammoniak durch Hydrolyse jeweils in der augenblicklich gerade zur Umsetzung der Stickoxide benötigten Menge erzeugt. Bei stationären Rauchgas-Reinigungsanlagen, z.B. hinter Kraftwerken, kann reines Ammoniak oder Ammoniak-Wasser verwendet werden.

Gemäß der DE-OS 44 17 238 ist vorgesehen, die Abgasleitung eines LKW-Dieselmotors direkt seitlich an eine zylindrische Einlaufkammer heranzuführen, in der ein trichterförmiges Lochblech angeordnet ist. An der engsten Stelle des Trichters ist ein Eindüsventil vorgesehen, über das eine wäßrige Harnstofflösung in den inneren Raum des Trichters eingedüst wird. Auf diese Weise wird eine homogene Verteilung der Harnstofflösung im Abgas über den gesamten Querschnitt der Einlaufkammer erzielt. An die Einlaufkammer schließen sich ein Hydrolysekatalysator, ein DeNOₓ-Katalysator und gegebenenfalls ein Oxidationskatalysator an.

Hiervon unterscheidet sich eine Lösung, die in der EP-OS 0,586,913 beschrieben ist und von der eingangs ausgegangen wird. Um eine ausreichende Vernebelung des zu zerstäubenden Mediums, d.h. des Reaktionsmittels Harnstoff, vor dem Einbringen in den mit Schadstoffen belasteten Abgasstrom zu erhalten, ist eine Mischeinrichtung oder Vormischkammer vorgesehen. In diese Vormischkammer werden das Medium und ein Druckgas wie Luft zur innigen Vermischung miteinander, d.h. zur Bildung einer Emulsion, eingeleitet. Die Vormischkammer ist über eine einzige Misch- oder Rohrleitung mit einen Zerstäuberdüse verbunden, welche ihrerseits im Abgasstrom angeordnet ist. In der Mischkammer nach Figur 2 dieser Druckschrift trifft das Druckgas seitlich oder tangential auf den Medienstrom auf. Mit dieser Vormischung und dem Einsprühen gelingt es, die Reduktionsmittel-Flüssigkeit recht gut auf den Abgasstrom zu verteilen. Die Verwendung der Druckluft bewirkt dabei auch eine Kühlung der im heißen Abgasstrom befindlichen Einsprühdüse. Ein Problem kann allerdings bei der Anwendung der Zerstäubereinrichtung beim Einsprühen einer wäßrigen Harnstofflösung zur Reduktion von NOₓ entstehen, weil sich nämlich dabei Harnstoffkristalle und Abgasrückstände ablagern können. Um diesen Nachteil zu beseitigen, wird dort vorgeschlagen, die mit dem Harnstoff in Berührung kommenden Oberflächenbereiche der Zerstäubereinrichtung mit einer katalytischen Schicht zu überziehen. Bei der Düse kommt zusätzlich auch eine Platinierung und/oder eine Aufheizung in Betracht. Diese Hilfsmittel sind aber verhältnismäßig aufwendig.

Besonders kritisch bezüglich Ablagerungen ist in der Zerstäubereinrichtung die genannte Vormischkammer. Es hat sich nämlich gezeigt, daß sich in der zwecks tangentialen Auftreffens seitlich an der Vormischkammer angeschlossenen Luftleitung trockener Harnstoff ablagert, der zum Verstopfen der Luftleitung führt, und zwar kurz vor der Einmündung in die Vormischkammer und insbesondere bei längerem ununterbrochenen Betrieb. Durch die dadurch bewirkten veränderten Druckverhältnisse in der Vormischkammer kommt es zu falschen Dosierungen von Harnstofflösung. Dies muß unbedingt vermieden werden.

Auch aus der DE-OS 42 21 363 ist eine Vormischkammer zur Erzeugung eines homogenen Gemisches aus einem Druckgas und einem Reduktionsmittel bekannt. Hierbei ragt ein Führungsrohr für das Reduktionsmittel senkrecht zur Strömungsrichtung des Druckgases in ein Führungsrohr des Druckgases, wobei das Führungsrohr zum Auslaß hin trichterförmig geweitet ist. Hierdurch wird jedoch nicht verhindert, daß das Reduktionsmittel auch entgegen der Strömungsrichtung des Druckgases ausströmt und dort Ablagerungen bildet. Auch ist die Effizienz einer derartigen, nach dem Spritzpistolen-Prinzip arbeitenden Vormischkammer gering.

Aufgabe der Erfindung ist es demnach, eine Vormischkammer der eingangs genannten Art mit verhältnismäßig geringem Aufwand so auszugestalten, daß die besagten Ablagerungen und damit falsche Dosierungen vermieden werden. Ferner ist es Aufgabe der Erfindung, eine entsprechende Zerstäubereinrichtung mit einer solchen Vormischkammer anzugeben.

Die erstgenannte Aufgabe wird durch eine Vormischkammer nach dem Vergaser-Prinzip für die Mischung eines Druckgases mit einem Reduktionsmittel gelöst, wobei erfindungsgemäß die Druckgas-Führung einen geradlinigen Kanal umfaßt, der eine Verengung besitzt, wobei die Reduktionsmittel-Führung eine geradlinige Leitung umfaßt, die etwa zentral im Druckgas-Kanal angeordnet ist, und wobei die geradlinige Reduktionsmittel-Leitung im Bereich der Verengung mündet. Unter dem Begriff "Führung" ist hierbei jede Art von Strömungsweg, z. B. Leitung, Kanal, Bohrung, Rohr oder Kapillare, zu verstehen. Unter "Verengung" ist der Bereich des kleinsten Querschnitts zu verstehen.

Die Erfindung beruht auf der Überlegung, daß das flüssige Reduktionsmittel, wie Harnstofflösung oder Ammoniak-Wasser, definiert an der Stelle zum Druckgas, wie Luft, treten soll, an der die Strömung des Druckgases beschleunigt wird und an der dadurch ein entsprechend niedriger Druck herrscht. Dies wird beim Vergaser-Prinzip beispielsweise durch das Umströmen der parallel geführten Reduktionsmittel-Führung an der Auslaßöffnung durch das Druckgas erreicht. Ein Einströmen des flüssigen Reduktionsmittels in die Druckgas-Führung (Strömungsweg für das Druckgas) wird verhindert, weil der Druckgas-Druck entgegen der Strömung - von der Mündung der ReduktionsmittelFührung (Strömungsweg für das Reduktionsmittel) aus gesehen - ansteigt. Es ergibt sich somit ein besonders einfaches Konstruktionsprinzip, das insbesondere für die Vermischung von Druckgas mit Harnstofflösung oder Ammoniak-Wasser geeignet ist.

Vorzugsweise ist vorgesehen, daß die geradlinige Reduktionsmittel-Leitung eine Kapillare ist, die bevorzugt aus einem Edelstahl besteht. Die Kapillare kann insbesondere in einem Führungsteil gehaltert sein, das in das Gehäuse der Vormischkammer einschraubbar ist.

Weitere vorteilhafte Ausgestaltungen sind in den entsprechenden Unteransprüchen gekennzeichnet.

Die Aufgabe bezüglich der Zerstäubereinrichtung wird erfindungsgemäß dadurch gelöst, daß hinter der Verengung an die Druckgasführung eine Mischleitung angeschlossen ist, die zu einer Zerstäuberdüse führt.

Eine derartige Zerstäubereinrichtung eignet sich insbesondere zur Zudosierung von Reduktionsmittel in ein stickoxidhaltiges Abgas, wobei dann die Zerstäuber-Düse in einem Abgaskanal für das stickoxidhaltige Abgas angeordnet ist.

Ausführungsbeispiele der Erfindung werden im folgenden anhand von zwei Figuren näher erläutert. Es zeigen:
- Figur 1: eine mit einer Vormischkammer ausgerüstete Zerstäubereinrichtung, die für eine Abgas-Reinigungsanlage für einen Verbrennungsmotor bestimmt ist, und
- Figur 2: eine Ausführungsform der Vormischkammer nach der Erfindung.

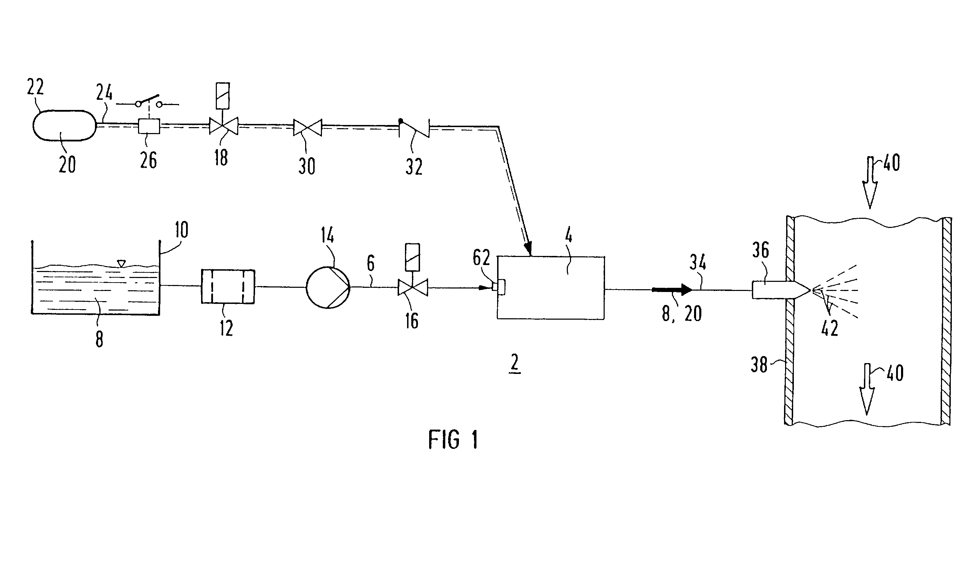

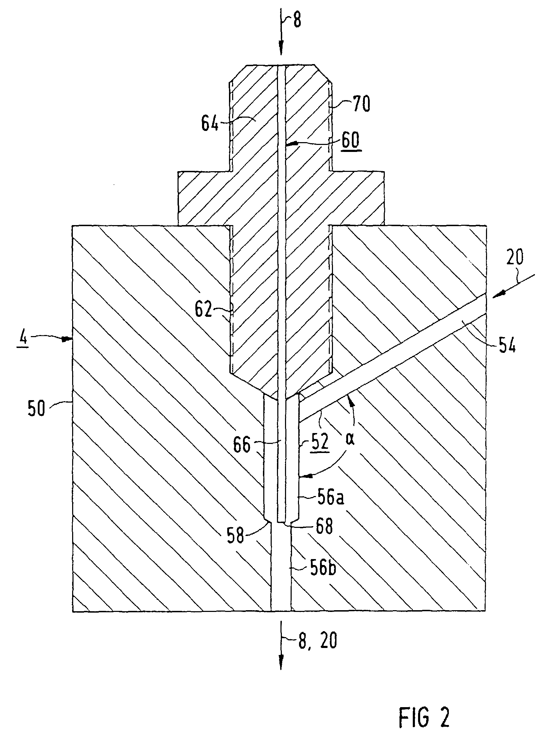

Nach Figur 1 umfaßt die dargestellte Zerstäubereinrichtung 2 als zentrales Bauteil eine Mischeinrichtung oder Vormischkammer 4, die nach dem Vergaser-Prinzip aufgebaut ist. Letzteres wird anhand von Figur 2 später verdeutlicht.

In die Mischeinrichtung 4 mündet eine Zufuhrleitung 6 für ein zu zerstäubendes Medium, insbesondere ein Reduktionsmittel 8 wie wäßrige Harnstofflösung. Das Reduktionsmittel 8 ist in einem Vorratsbehälter 10 untergebracht, der auf dem Fahrzeug, dessen Abgas gereinigt werden soll, mitgeführt wird. Dieser Vorratsbehälter 10 ist über ein Filter 12, eine Pumpe 14, die zur Druckerzeugung dient, und ein Dosierventil 16, die sich in der Zufuhrleitung 6 befinden, an die Mischeinrichtung 4 angeschlossen. Insbesondere kann das Dosierventil 16 unmittelbar der Mischkammer 4 vorgeschaltet sein. Mit Hilfe der Pumpe 14 wird das zu zerstäubende Reduktionsmittel 8 in den Mischraum der Mischeinrichtung 4 gefördert. Mit Hilfe des Dosierventils 16 wird dabei die pro Zeiteinheit erforderliche Dosierrate vorgegeben.

In die Vormischkammer 4 gelangt über eine weitere Zufuhrleitung 18 ein Druckgas 20, wie beispielsweise Druckluft. Dieses Druckgas 20 mischt sich in der Vormischkammer 4 mit dem einströmenden Reduktionsmittel 8. Dabei entsteht ein Aerosol 8, 20, das am Ausgang abgegeben wird.

Das Druckgas 20 ist in einem Druckspeicher 22 untergebracht, der mit einem Luftauslaß 24 versehen ist. Von diesem Luftauslaß 24 wird das Druckgas 20 über einen elektrisch betätigbaren Druckschalter 26, ein Absperrventil 28, ein Druckbegrenzungsventil 30 und ein Rückschlagventil 32 in die Vormischkammer 4 geleitet.

Die in der Vormischkammer 4 erzeugte Mischung 8, 20 gelangt über eine Mischleitung 34 zu einer Zerstäuberdüse 36, die in einem Abgaskanal 38 untergebracht ist. In diesem Abgaskanal 38 strömt das zu reinigende Abgas 40 in Richtung auf eine (nicht gezeigte) Katalysatoranordnung von bekannter Ausgestaltung, die insbesondere von der eingangs genannten Art sein kann. Die Zerstäuberdüse 36 sorgt dafür, daß die Mischung aus Reduktionsmittel 8 und Druckgas 20 in Form eines feinen Nebels 42 in den Strom des Abgases 40 eingeblasen und von diesem in Richtung auf die Katalysatoranordnung gleichmäßig verteilt weitergetragen wird.

Nach Figur 2 umfaßt die Vormischkammer 4 ein Gehäuse 50, das insbesondere aus einem Metall, wie z. B. Edelstahl, besteht. Dieses Gehäuse 50 besitzt eine durchgehende zentrale Längsbohrung mit drei verschiedenen Querschnitten.

Für das Druckgas 20 ist eine Führung 52 vorgesehen, die einen seitlichen Anschlußkanal 54 und einen zentralen Kanal 56a, 56b mit einer Verengung 58 nach unten hin umfaßt. In den geradlinigen Kanal 56a, 56b mündet etwa zentral im Gehäuse 50 der Anschlußkanal 54, durch den von außen das Druckgas 20 zugeführt wird. Der Anschlußkanal 54 ist seitlich unter einem stumpfen Winkel α am geradlinigen Druckgaskanal 56a angeordnet. Von besonderer Bedeutung ist, daß der obere und breitere, also oberhalb der Verengung 58 gelegene Teil 56a des Druckgaskanals 56a, 56b als Beruhigungsstrecke für das seitwärts einströmende Druckgas 20 dient.

Für das Reduktionsmittel 8 ist eine Führung 60 vorgesehen. Dafür ist der obere Teil der durchgehenden zentralen Längsbohrung als relativ breite Gewindebohrung 62 ausgeführt. In dieser Gewindebohrung 62 ist ein Führungsteil 64 verschraubt. Dieses Führungsteil 64 ist im Querschnitt, wie dargestellt, T-förmig ausgebildet und schließt den oberen Druckgaskanal 56a ab. Es besteht bevorzugt aus einem Kunststoff. Und es enthält zentral ein durchgehendes Röhrchen oder eine Kapillare 66. Diese Kapillare 66 wird dabei vom Führungsteil 64 gehaltert. Die Kapillare 66 besteht bevorzugt aus einem Metall, wie z. B. Edelstahl, und ist relativ dünn. Sie kann beispielsweise einen Außendurchmesser von 1 mm und einen Innendurchmesser von 0,65 mm besitzen. Die Kapillare 66 ist hier die Reduktionsmittel-Führung 60. Die Leitung 56b für die sich bildende Emulsion 8, 20 kann dann einen Innendurchmesser von etwa 2 mm aufweisen.

Von Bedeutung ist es weiterhin, daß die geradlinige Reduktionsmittel-Leitung oder Kapillare 66 etwa zentral im Druckgas-kanal 56a, 56b angeordnet ist und etwa im Bereich der Verengung 58 mündet. In Figur 2 ist gezeigt, daß das Ende 68 der Kapillare 66 direkt in der Verengung 58 liegt. Sie kann auch etwas tiefer angeordnet sein.

Im Bereich der Kapillaren 66, und zwar zwischen der Mündung des Seitenkanals 54 und der Verengung 58, muß ein ausreichend langer Teilkanal 56a als Beruhigungsstrecke für das Druckgas 20 vorhanden sein. Dann bildet sich in diesem Raum, bedingt durch die Strömungsverhältnisse im Bereich der Verengung 58 - nach dem Bernoulli-Prinzip - hier ein gewisser Unterdruck aus. Dadurch kann das flüssige Reduktionsmittel 8 nicht in rückwärtiger Richtung strömen und sich als Belag, z. B. als fester Harnstoff, im Bereich der Druckgasführung 52 niederschlagen. Dadurch ist gewährleistet, daß der Öffnungsquerschnitt sich nicht im Laufe der Zeit verändert, wodurch die vom Dosierventil 16 bewirkten Dosierungen stabil bleiben.

Anzumerken ist, daß bei der vorliegenden Konstruktion die Strömungsrichtungen von Betriebsstoff (Reduktionsmittel 8) und Trägerfluid (Druckgas 20), gesehen in Strömungsrichtung des Trägerfluids des Druckgases 20, bereits vor Einführung des Betriebsstoffs in das Trägerfluid weitgehend parallel sind.

Das Führungsteil 64 kann am oberen Ende mit einem Gewinde 70 versehen sein, so daß dort das Dosierventil 16 direkt aufgeschraubt werden kann.

Nach der Mischung von Druckgas (Luft) 20 und Reduktionsmittel (Flüssigkeit) 8 im Bereich der Verengung 58 sollten bis zur Zerstäuberdüse 36 Querschnittsänderungen nach Möglichkeit vermieden werden. Auch sollte der Weg für die von der Vormischkammer 4 abgegebene Emulsion 8, 20 bis zur Zerstäuberdüse 36 klein gehalten werden.

## Patentansprüche

1. Vormischkammer (4) nach dem Vergaser-Prinzip für die Mischung eines Druckgases (20), wie Druckluft, mit einem Reduktionsmittel (8), wie Harnstofflösung oder Ammoniak-Wasser, für eine Abgas-Reinigungsanlage,
**dadurch gekennzeichnet,** daß die Druckgas-Führung (52) einen geradlinigen Kanal (56a, 56b) umfaßt, der eine Verengung (58) besitzt, daß die Reduktionsmittel-Führung (60) eine geradlinige Leitung (66) umfaßt, die etwa zentral im Druckgas-Kanal (56a, 56b) angeordnet ist, und daß die geradlinige Reduktionsmittel-Leitung (66) im Bereich der Verengung (58) mündet.

2. Vormischkammer nach Anspruch 1,
**dadurch gekennzeichnet,** daß die geradlinige Reduktionsmittel-Leitung (66) eine Kapillare ist, die bevorzugt aus einem Edelstahl besteht.

3. Vormischkammer nach Anspruch 2,
**dadurch gekennzeichnet,** daß die Kapillare in einem Führungsteil (64) gehaltert ist.

4. Vormischkammer nach Anspruch 3,
**gekennzeichnet durch** ein insbesondere aus einem Metall bestehendes Gehäuse (50), in das das Führungsteil (64) bevorzugt zentral einschraubbar ist.

5. Vormischkammer nach Anspruch 3 oder 4,
**dadurch gekennzeichnet,** daß das Führungsteil (64) aus Kunststoff besteht.

6. Vormischkammer nach einem der Ansprüche 1 bis 5,
**dadurch gekennzeichnet,** daß in den geradlinigen Druckgas-Kanal (56a, 56b) seitlich ein Anschlußkanal (54) mündet.

7. Vormischkammer nach Anspruch 6,
**dadurch gekennzeichnet,** daß der Anschlußkanal (54) unter einem stumpfen Winkel (α) in den geradlinigen Druckgas-Kanal (56a, 56b) mündet.

8. Vormischkammer nach einem der Ansprüche 3 bis 7,
**dadurch gekennzeichnet,** daß ihr ein Dosierventil (16) unmittelbar vorgeschaltet ist, wobei das Dosierventil (16) bevorzugt unmittelbar am Führungsteil (64) angeordnet ist.

9. Zerstäubereinrichtung (2) für eine Abgas-Reinigungsanlage mit einer Vormischkammer nach einem der Ansprüche 1 bis 8,
**dadurch gekennzeichnet,** daß hinter der Verengung (58) an die Druckgasführung (52) eine Mischleitung (34) angeschlossen ist, die zu einer Zerstäuber-Düse (36) führt.

10. Zerstäubereinrichtung nach Anspruch 9,
**dadurch gekennzeichnet,** daß die Zerstäuber-Düse (36) in einem Abgaskanal (38) für ein stickoxidhaltiges Abgas (40) angeordnet ist.

## Claims

1. Premixing chamber (4) according to the carburettor principle for mixing a compressed gas (20), such as compressed air, with a reducing agent (8), such as urea solution or ammonia water, for an exhaust gas purification system, characterized in that to feed (52) for the compressed gas comprises a straight duct 56a, 56b) which has a taper (58), in that the feed (60) for the reducing agent comprises a straight conduit (66) which is arranged approximately centrally in the compressed gas duct (56a, 56b), and in that the straight conduit (66) for the reducing agent opens in the region of the taper (58).

2. Premixing chamber according to claim 1, characterized in that the straight conduit (66) for the reducing agent is a capillary which preferably consists of a special steel.

3. Premixing chamber according to Claim 2, characterized in that the capillary is held in a guide part (64).

4. Premixing chamber according to Claim 3, characterized by a housing (50) which consists, in particular, of a metal and into which the guide part (64) can be screwed, preferably centrally.

5. Premixing chamber according to Claim 3 or 4, characterized in that the guide part (64) consists of plastic.

6. Premixing chamber according to any of Claims 1 to 5, characterized in that a connection duct (54) opens laterally into the straight compressed gas duct (56a, 56b).

7. Premixing chamber according to Claim 6, characterized in that the connection duct (54) opens into the straight compressed gas duct (56a, 56b) at an obtuse angle (α).

8. Premixing chamber according to any of Claims 3 to 7, characterized in that it has a metering valve (16) connected directly upstream of it, said metering valve (16) preferably being arranged directly on the guide part (64).

9. Nebulizing device (2) for an exhaust gas purification system, having a premixing chamber according to any of Claims 1 to 8, characterized in than a mixing conduit (34) which leads to a nebulizing nozzle (36) is connected to the feed (52) for the compressed gas downstream of the taper (58).

10. Nebulizing device according to Claim 9, characterized in that the nebulizing nozzle (36) is arranged in an exhaust gas duct (38) for an exhaust gas (40) containing oxides of nitrogen.

## Revendications

1. Chambre (4) de prémélange, suivant le principe du carburateur pour mélanger un gaz (20) comprimé, tel que de l'air comprimé, à un réducteur (8), tel qu'une solution d'urée ou de l'eau ammoniacale, pour une installation d'épuration de gaz d'échappement,
**caractérisée** en ce que le passage (52) pour le gaz comprimé comprend un conduit (56a, 56b) rectiligne qui possède un rétrécissement (58), en ce que le passage (60) pour le réducteur comprend une conduite (66) rectiligne qui est disposée à peu près centralement dans le conduit (56a, 56b) de gaz comprimé, et en ce que la conduite (66) rectiligne de réducteur débouche dans la région du rétrécissement (58).

2. Chambre de prémélange suivant la revendication 1,
**caractérisée** en ce que la conduite (66) rectiligne de réducteur est un tube capillaire qui est réalisé, de préférence, en acier fin.

3. Chambre de prémélange suivant la revendication 2, **caractérisée** en ce que le tube capillaire est maintenu dans un élément (64) de guidage.

4. Chambre de prémélange suivant la revendication 3, **caractérisée** par un boîtier (50) réalisé de préférence en métal, dans lequel l'élément (64) de guidage peut être vissé de préférence centralement.

5. Chambre de prémélange suivant la revendication 3 ou 4, **caractérisée** en ce que l'élément (64) de guidage est réalisé en matière plastique.

6. Chambre de prémélange suivant l'une des revendications 1 à 5, **caractérisée** en ce qu'un conduit (54) de raccordement débouche latéralement dans le conduit (56a, 56b) rectiligne de gaz comprimé.

7. Chambre de prémélange suivant la revendication 6, **caractérisée** en ce que le conduit (54) de raccordement débouche sous un angle obtus (α) dans le conduit (56a, 56b) rectiligne de gaz comprimé.

8. Chambre de prémélange suivant l'une des revendications 3 à 7, **caractérisée** en ce qu'elle est directement précédée d'une soupape (16) de dosage, la soupape (16) de dosage étant de préférence directement disposée sur l'élément (64) de guidage.

9. Dispositif (2) de pulvérisation pour une installation d'épuration de gaz d'échappement pourvue d'une chambre de prémélange suivant l'une des revendications 1 à 8, **caractérisé** en ce qu'une conduite (34) de mélange. qui mène à une buse (36) de pulvérisation, est raccordée en aval du rétrécissement (58) au passage (52) de gaz comprimé.

10. Dispositif de pulvérisation suivant la revendication 9, **caractérisé** en ce que la buse (36) de pulvérisation est disposée dans un conduit (38) de gaz d'échappement pour des gaz (40) d'échappement contenant des oxydes d'azote.
